# EUROPÄISCHE PATENTSCHRIFT

(11) **EP 0 773 714 B1**
(45) Veröffentlichungstag und Bekanntmachung des Hinweises auf die Patenterteilung: **07.10.1998**
(21) Anmeldenummer: 95929033.9
(22) Anmeldetag: 31.07.1995
(51) Int. Cl.: A01K 27/00

(54) **HALSGURT ZUM HALTEN UND FÜHREN VON TIEREN**
COLLAR FOR RESTRAINING AND LEADING ANIMALS
COLLIER POUR RETENIR ET GUIDER DES ANIMAUX

(30) Priorität: 01.08.1994 DE 9412361 U
(43) Veröffentlichungstag der Anmeldung: 21.05.1997
(73) Patentinhaber: Koch, Heinrich, 86899 Landsberg am Lech (DE)
(72) Erfinder: Koch, Heinrich, 86899 Landsberg am Lech (DE)
(74) Vertreter: Grünecker, Kinkeldey, Stockmair & Schwanhäusser Anwaltssozietät
(86) Internationale Anmeldenummer: EP9503050
(87) Internationale Veröffentlichungsnummer: WO9603865

(56) Entgegenhaltungen:
- DE-A- 3 925 548
- GB-A- 980 863
- US-A- 4 426 957

## Beschreibung

Die Erfindung betrifft einen Halsgurt zum Halten und Führen von Tieren, insbesondere Hunden, mit einem Gurtband, einem Schnellverschluß zum An- und Ablegen des Gurtbandes und einer Befestigungseinrichtung zum Befestigen einer Leine oder Kette.

Die DE 39 25 548 C2 zeigt einen Halsgurt, der neben einem Ring zur Befestigung einer Leine einen Schnellverschluß aufweist, durch den der Halsgurt zum An- und Ablegen zu verschließen bzw. zu öffnen ist.

Ein derartiger Halsgurt birgt jedoch die Gefahr, daß der Schnellverschluß aufspringt, wenn das Tier zu stark an der Leine oder der Kette zieht, wie es insbesondere bei sehr großen Tieren häufig vorkommt. Darüber hinaus ist es möglich, daß der Schnellverschluß durch das Tier selbst geöffnet wird, wenn das Tier z.B. beim Hindurchstecken seines Kopfes durch ein Hindernis den Schnellverschluß gegen das Hindernis drückt.

Der Erfindung liegt daher die Aufgabe zugrunde, einen Halsgurt der eingangs genannten Art derart zu verbessern, daß der Halsgurt auch bei einem Aufspringen des Schnellverschlusses verläßlich den Hals des Tieres umfaßt und ein Halten und Führen des Tieres mit erhöhter Sicherheit gewährleistet.

Diese Aufgabe wird bei einem Halsgurt der eingangs genannten Art erfindungsgemäß dadurch gelöst, daß das Gurtband zu einem endlosen Gurt fest verbunden ist, wobei der Schnellverschluß zur Überbrückung eines Gurtabschnitts und zur Einstellung einer vorbestimmten Länge des Gurtbandes parallel zu dem zu überbrückenden Gurtabschnitt vorgesehen ist.

Der erfindungsgemäße Halsgurt zeichnet sich insbesondere dadurch aus, daß selbst dann, wenn der Schnellverschluß unter zu großer Belastung aufspringt, der Halsgurt nicht gänzlich geöffnet ist und das Tier nicht ausreißen kann, da das Gurtband zu einem endlosen Gurt verbunden ist.

Durch den Schnellverschluß parallel zu dem zu überbrückenden Gurtabschnitt läßt sich der Halsgurt in einer weiteren Einstellung zum Anlegen rasch und einfach über den Kopf des Tieres schlupfen, wenn der Schnellverschluß geöffnet ist, der dann zu schließen ist, um den Halsgurt in einer enganliegenden Einstellung am Hals des Tieres zu fixieren.

In einer vorteilhaften Ausgestaltung der Erfindung ist das Gurtband längenverstellbar, so daß der Halsgurt für verschiedene Größen einstellbar ist. Der Halsgurt ist dadurch nicht in unterschiedlichen Größen herzustellen, um verschiedenen Rassen und Größen von Hunden zu passen.

Vorzugsweise ist eine Klemmschnalle zur Längenverstellung des Gurtbandes vorgesehen, wobei das Gurtband mit einem ersten Ende durch die Klemmschnalle und durch ein Verbindungsglied geschleift und an der Klemmschnalle befestigt ist, und mit einem zweiten Ende an dem Verbindungsglied befestigt ist. Durch die Klemmschnalle kann das Gurtband stufenlos über einen großen Bereich verstellt werden, wodurch der Halsgurt sehr exakt an den Hals des Tieres angepaßt werden kann. Darüber hinaus bietet die Klemmschnalle den Vorteil, daß an dem Gurtband keine Löcher und Ösen vorzusehen sind.

In vorteilhafter Weise ist nach einer Ausgestaltung der Erfindung das erste Ende um einen Schnallensteg der Klemmschnalle geschlungen und mit einem inneren Gurtabschnitt auf der gegenüberliegenden Seite des Schnallensteges fest verbunden, derart, daß das erste Ende des Gurtbandes zwischen dem inneren Gurtabschnitt und einem äußeren Gurtabschnitt eingeschlossen ist.

Dies verhindert, daß das Tier sich an dem Gurtende aufreibt, bzw. mit diesem an einem Hindernis hängenbleibt. Darüber hinaus kann das Gurtende nicht ausfransen.

Eine vorteilhafte Ausführungsform der Erfindung ist dadurch gegeben, daß der Schnellverschluß ein an sich bekanntes zweiteiliges Steckschloß ist, mit einem ersten Schloßteil, das zumindest zwei elastische Zungen mit zumindest jeweils einem hakenförmigen Absatz aufweist, und einem zweiten Schloßteil, das eine Aussparung zur Aufnahme der Zungen aufweist, wobei die Zungen in die Aussparung einschiebbar und mit dem zweiten Schloßteil in verriegelnden Eingriff bringbar sind. Die zweifache Verriegelung zwischen den beiden Schloßteilen durch die zwei Zungen gewährleistet einer erhöhte Sicherheit des Steckschlosses gegen Aufspringen auch unter hohen Kräften, wie sie bei großen Tieren durchaus üblich sind. Zusätzlich ist es von Vorteil, daß zum Öffnen des Steckschlosses zwei entgegengesetzt wirkende Kräfte notwendig sind, um die beiden Zungen zusammenzudrücken, so daß das Schloß nicht aufspringt, wenn das Tier das Steckschloß einseitig gegen ein Hindernis drückt.

Nach einer weiteren besonders vorteilhaften Ausgestaltung der Erfindung ist das Gurtband an seinem zweiten Ende dreifach schleifenförmig eingeschlagen, und übereinanderliegende Gurtabschnitte sind fest miteinander verbunden, derart, daß drei Schlaufen gebildet sind, wobei in einer ersten Schlaufe ein Ring zur Befestigung der Leine, in einer zweiten Schlaufe das Verbindungsglied und in einer dritten Schlaufe ein Schloßteil des Steckschlosses aufgenommen sind. Diese Schlaufenführung des Gurtbandes erlaubt es, das Gurtband einstückig auszuführen und die drei Schlaufen zur Aufnahme des Ringes, des Verbindungsgliedes und eines Schloßteiles durch nur eine einzige Naht- bzw. Verbindungsstelle herzustellen.

Vorzugsweise ist das zweite Ende des Gurtbandes zwischen den übereinanderliegenden Gurtabschnitten eingeschlossen, so daß das Tier sich an dem Gurtende nicht aufscheuern kann und einem Ausfransen des Gurtbandes vorgebeugt ist.

Eine günstige Ausgestaltung der Erfindung besteht auch darin, daß ein zweites Schloßteil des Steckschlosses in einer vierten Schlaufe des Gurtbandes zwischen dem zu überbrückenden Gurtabschnitt und der Klemmschnalle aufgenommen ist.

In vorteilhafter Weise ist nach einer Ausgestaltung der Erfindung ein Klemmring zur Führung des zu überbrückenden Gurtabschnitts vorgesehen, derart, daß das Gurtband durch den Klemmring, um einen Steg des Schloßteiles und zurück durch den Klemmring geführt ist. Dadurch kann zum einen der zu überbrückende Gurtabschnitt im geschlossenen Zustand des Schnellverschlusses gestrafft werden, so daß der zu überbrückende Gurtabschnitt keine Schleifen bildet und das Tier drückt, zum anderen verhindert der Klemmring bei einem Aufspringen des Schnellverschlusses zumindest zunächst, daß der Halsgurt seine enganliegende Einstellung ändert und sich weitet.

Eine günstige Ausgestaltung der Erfindung besteht auch darin, daß zwischen der Klemmschnalle und dem Verbindungsglied ein Spannring vorgesehen ist. Das in diesem Bereich doppelt geführte Gurtband wird durch den Spannring zusammengehalten und ein Verrutschen des Verbindungsgliedes ist verhindert.

Die Erfindung wird nachstehend anhand eines bevorzugten Ausführungsbeispiels und zugehöriger Zeichnungen näher erläutert. In diesen zeigen:
- Fig.1: eine perspektivische Darstellung eines Halsgurtes mit einem Schnellverschluß parallel zu einem zu überbrückenden Gurtabschnitt in einem geschlossenen Zustand nach einem Ausführungsbeispiel der Erfindung,
- Fig.2: eine Draufsicht der Gurtführung eines Gurtbandes um den Schnellverschluß herum in einer Teilschnitt-Darstellung nach der Ausführungsform gemäß Fig. 1,
- Fig.3: eine Draufsicht einer Klemmschnalle zur Längenverstellung des Gurtbandes und der Gurtführung durch die Klemmschnalle in einer Schnittdarstellung gemäß dem Ausführungsbeispiel nach Fig. 1,
- Fig.4: eine Draufsicht eines an sich bekannten zweiteiligen Steckschlosses in geöffnetem Zustand in einer Teilschnitt-Darstellung nach dem Ausführungsbeispiel der Erfindung gemäß Fig. 1.

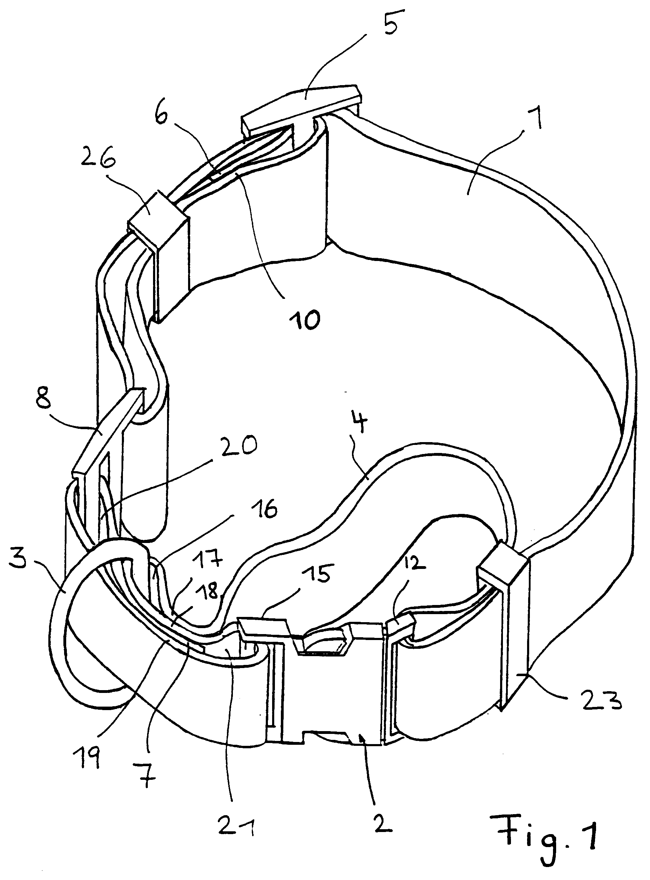

In Fig. 1 ist ein bevorzugtes Ausführungsbeispiel eines erfindungsgemäßen Halsgurtes zu sehen, der ein Gurtband 1 aufweist, an dem ein Ring 3 zur Befestigung einer Leine oder Kette sowie ein Schnellverschluß 2 befestigt sind.

Das Gurtband 1 ist ein gewebter Textilgurt, der trotz hoher Reißfestigkeit sehr geschmeidig ist. Es ist jedoch nicht darauf beschränkt, sondern es können auch andere Materialien, wie z.B. Leder, verwendet werden.

Das Gurtband 1 ist einstückig und zu einem endlosen Gurt verbunden. Aufgrund der geschickten Gurtführung sind dabei zur Befestigung des Ringes 3 und des Schnellverschlusses 2 und weiterer nachstehend beschriebener Teile des Halsgurtes lediglich insgesamt drei Nahtstellen notwendig.

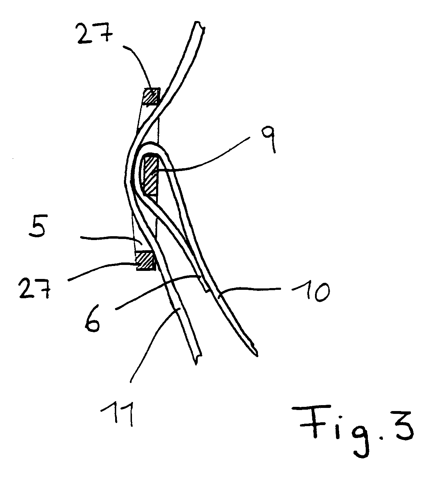

Zur Längenverstellung des Gurtbandes 1 ist eine Klemmschnalle 5 vorgesehen, die, wie in Fig. 3 zu sehen ist, einen mittleren Schnallensteg 9 aufweist, sowie zwei seitliche Stege 27, wobei das Gurtband 1 um den mittleren Schnallensteg 9 herum zwischen den beiden äußeren Schnallenstegen 27 hindurch gefädelt ist. Von der Klemmschnalle 5 weiterführend ist ein erstes Ende 6 des Gurtbandes 1 durch ein Verbindungsglied 8 geschleift und zurück zur Klemmschnalle 5 geführt, an der das erste Ende 6 befestigt ist.

Das erste Ende 6 des Gurtbandes 1 ist dabei um den Schnallensteg 9 geschlungen und mit einem inneren Gurtabschnitt 10 auf der gegenüberliegenden Seite des Schnallensteges 9 fest vernäht.

Es ist zu beachten, daß das erste Ende 6 mit dem inneren Gurtabschnitt 10 nicht nur vernäht, sondern auch durch Verkleben, Verschweißen oder dergleichen fest verbunden sein kann.

Das erste Ende 6 des Gurtbandes 1 ist derart um den Schnallensteg 9 geschlungen, daß das erste Ende 6 zwischen dem inneren Gurtabschnitt 10 und einem äußeren Gurtabschnitt 11 eingeschlossen ist, so daß das Tier sich weder an dem ersten Ende 6 aufscheuern noch mit diesem an einem Hindernis hängenbleiben kann. Darüber hinaus ist ein Ausfransen des Gurtendes 6 verhindert.

Um die Länge des Gurtbandes 1 zu verstellen, ist der äußere Gurtabschnitt 11 durch die Klemmschnalle 5 zu schieben bzw. zu ziehen, wodurch sich die Länge des Gurtabschnitts zwischen der Klemmschnalle 5 und dem Verbindungsglied 8 ändert. Dies ermöglicht eine stufenlose und sehr einfache Längenverstellung des Halsgurtes.

Wie in Fig. 1 zu sehen ist, ist das Gurtband 1 von der anderen Seite der Klemmschnalle wegführend mit einem ersten Verschlußteil 12 des Schnellverschlusses 2 verbunden. Davon weiterführend ist das Gurtband mit einem zweiten Verschlußteil 15 des zweiteiligen Schnellverschlusses 2, mit dem Ring 3 zur Befestigung einer Leine und dem Verbindungsglied 8 verbunden.

Über das Verbindungsglied 8 ist das Gurtband 1 zu einem endlosen Gurt verbunden, wobei durch das Befestigen der beiden Verschlußteile 12 und 15 an dem Gurtband 1 ein Gurtabschnitt 4 überbrückt wird, wenn der Schnellverschluß 2 geschlossen ist.

Zum Anlegen des Halsgurtes ist der Schnellverschluß 2 zu öffnen, so daß der Halsgurt in einer weiteren und längeren Einstellung über den Kopf des Tieres geschoben werden kann. Durch ein Verschließen des Schnellverschlusses 2 wird der Gurtabschnitt 4 überbrückt und der Halsgurt auf eine vorbestimmte Länge verkürzt, bei der der Halsgurt eng am Hals des Tieres anliegt. Der Halsgurt ist durch den Schnellverschluß 2 in einfacher Weise um den Hals des Tieres anzulegen. Dadurch, daß das Gurtband 1 fest zu einem endlosen Gurt verbunden ist, kann ein Tier selbst dann nicht aus dem Halsgurt ausreißen, wenn der Schnellverschluß 2 aufspringen sollte, da in diesem Falle der Gurtabschnitt 4 den Halsgurt zusammenhält und am Hals des Tieres fixiert.

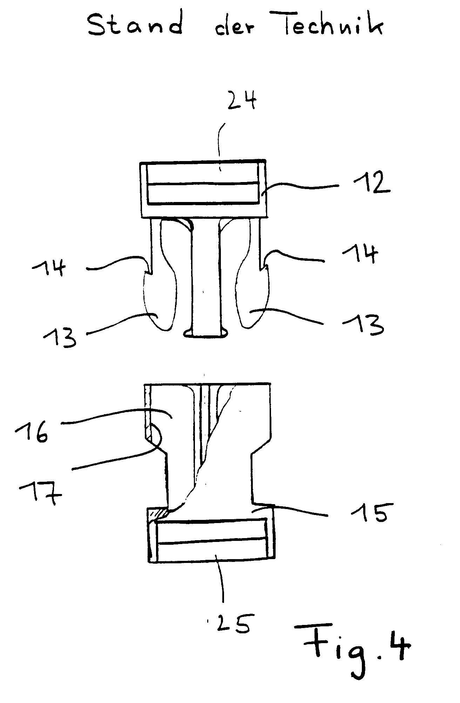

Wie in Fig. 4 zu sehen ist, ist der Schnellverschluß ein bereits bekanntes Steckschloß 2, mit einem ersten Schloßteil 12 und einem zweiten Schloßteil 15. An dem ersten Schloßteil 12 sind integral einstückig zwei elastische Zungen 13 ausgebildet, die an einer Außenseite jeweils einen hakenförmigen Absatz 11 aufweisen. Das erste Schloßteil 12 wird mit seinen beiden Zungen 13 in eine Aussparung 16 des zweiten Schloßteiles 15 eingeschoben, wobei die Zungen 13 von der Innenseite einer Seitenwand 17 des zweiten Schloßteiles 15 elastisch zusammengedrückt werden. Wenn die beiden Schloßteile 12 und 15 vollständig ineinandergeschoben sind, werden die beiden Zungen 13 durch die Seitenwände 17 des zweiten Schloßteiles 15 nicht mehr zusammengedrückt und rasten mit ihren hakenförmigen Ansätzen 14 im zweiten Schloßteil 15 ein. Zum Öffnen des Steckschlosses 2 sind die eingerasteten Zungen 13 durch entgegengesetzt wirkende Kräfte zusammenzudrücken, so daß die Absätze 14 außer Eingriff sind und die Zungen 13 aus der Aussparung 12 herausgezogen werden können.

Die beiden Zungen 13 gewährleisten eine erhöhte Sicherheit gegen ein Aufspringen des Steckschlosses 2, da die beiden Schloßteile 12 und 15 durch zwei hakenförmige Absätze 14 doppelt verriegelt sind. Darüber hinaus ist auch ein Öffnen des Steckschlosses 2 durch das Tier selbst erschwert, da das Schloß nicht aufspringt, wenn das Schloß einseitig gegen ein Hindernis gedrückt wird, da dann nur eine der beiden Zungen 13 aus der Verriegelung gedrückt wird.

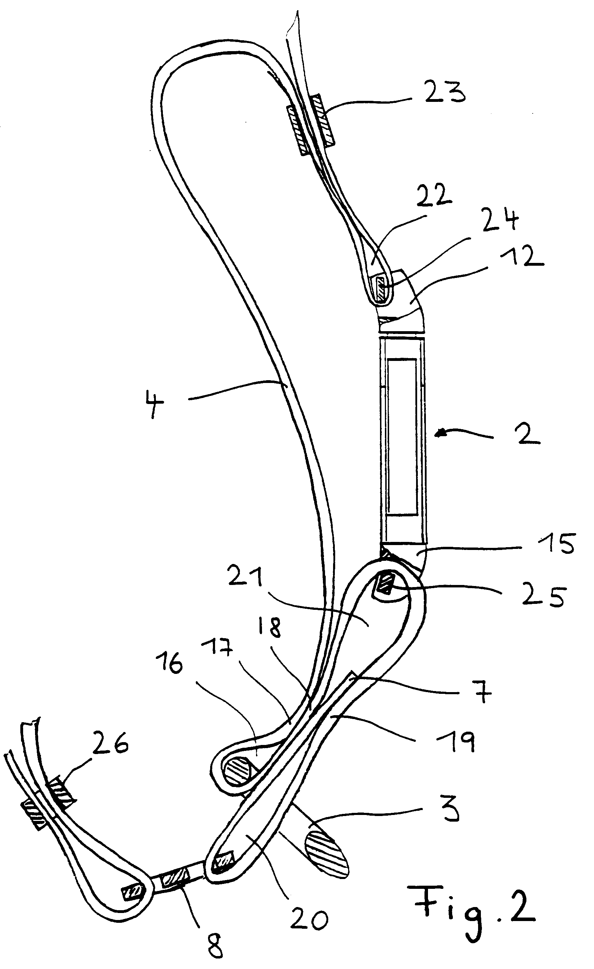

Wie in Fig. 2 gezeigt ist, ist das Gurtband 1 an seinem zweiten Ende 7 dreifach schleifenförmig eingeschlagen, so daß drei Schlaufen 16, 20, 21 gebildet sind. Die übereinanderliegenden Gurtabschnitte 17, 18, 7 und 19 sind fest miteinander verbunden, insbesondere miteinander vernäht. Das Gurtband 1 ist dabei derart eingeschlagen, daß das zweite Ende 7 des Gurtbandes 1 zwischen den übereinanderliegenden Gurtabschnitten 19 und 18 eingeschlossen ist, um ein Aufscheuern des Tieres oder ein Ausfransen des Gurtendes zu verhindern.

In einer ersten der drei Schlaufen 16 ist der Ring 3, in einer zweiten Schlaufe 20 ist das Verbindungsglied 8 und in einer dritten Schlaufe 21 ist das zweite Schloßteil 15 mit einem Schloßsteg 25 aufgenommen.

Durch die günstige Schlaufenführung ist zur Befestigung der drei Bauteile, nämlich des zweiten Schloßteiles 15, des Rings 3 zur Befestigung einer Leine und des Verbindungsglieds 8 lediglich eine einzige Nahtstelle notwendig. Da der Ring 3 zur Befestigung der Leine in einer Schlaufe zwischen dem Steckschloß 2 und dem Verbindungsglied 8 aufgenommen ist, kann der Ring 3 nicht entlang des Gurtbandes 1 verrutschen, sondern ist in der Nähe sowohl des Steckschlosses 8 als auch des Verbindungsglieds 8 fixiert, so daß weder das Steckschloß 2 noch das Verbindungsglied 8 auf den Hals des Tieres drückt oder reibt, wenn das Tier an der Leine zieht, da dann der Zug der Leine auf den Ring 3 auch das Steckschloß 2 und das Verbindungsglied 8 vom Hals des Hundes wegzieht.

Ebenso wie das zweite Schloßteil 15 ist auch das erste Schloßteil 12 des Steckschlosses 2 mit einem Steg 24 in einer Schlaufe des Gurtbandes 1 aufgenommen. Das Gurtband 1 umschlingt den Steg 24, wobei gegenüberliegende Gurtabschnitte fest miteinander verbunden sind, so daß eine vierte Schlaufe 22, in der der Steg 24 aufgenommen ist, fixiert ist.

Um den zu überbrückenden Gurtabschnitt 4 im geschlossenen Zustand des Steckschlosses 2 zu straffen, so daß dieser Gurtabschnitt 4 am Steckschloß 2 und entlang der vierten Schlaufe 22 anliegt und keine Falten macht, die das Tier drücken könnten, ist ein Klemmring 23 zur Führung des zu überbrückenden Gurtabschnitts 4 vorgesehen. Das Gurtband 1 ist dabei durch den Klemmring 23, um den Steg 24 des ersten Schloßteiles 12 und zurück durch den Klemmring 23 geführt, so daß ein Zurückschieben des Klemmrings 23, d.h. weg von dem ersten Schloßteils 12, den zu überbrückenden Gurtabschnitt 4 strafft. In seiner zurückgeschobenen Position verhindert der Klemmring 23 bei einem Aufspringen des Steckschlosses 2 zumindest zunächst, daß der Halsgurt sich aus seiner enganliegenden Einstellung ausweitet, da dazu der Klemmring 23 entgegen seiner Reib- und Klemmkraft in die Nähe des ersten Schloßteiles 12 zu schieben wäre.

Ähnlich dem Klemmring 23 ist, wie in Fig. 1 zu sehen ist, zwischen der Klemmschnalle 5 und dem Verbindungsglied 8 ein Spannring 26 vorgesehen, durch den das in diesem Bereich doppelt geführte Gurtband 1, nämlich der innere Gurtabschnitt 10 und der äußere Gurtabschnitt 11, geführt sind, was ein selbständiges Verstellen der Länge des Gurtbandes 1 durch die Klemmschnalle 5 erschwert.

Der erfindungsgemäße Halsgurt gewährleistet aufgrund seines einstückigen, zu einem endlosen Gurt verbundenen Gurtbandes ein Halten und Führen von Tieren mit erhöhter Sicherheit, da der Gurt sich nicht gänzlich öffnen kann, sondern stets verläßlich am Hals des Tieres anliegt. Darüber hinaus ist der Halsgurt durch den Schnellverschluß parallel zu dem überbrückenden Gurtabschnitt schnell und sehr einfach dem Tier an- und abzulegen.

## Patentansprüche

1. Halsgurt zum Halten und Führen von Tieren, insbesondere Hunden, mit einem Gurtband, einem Schnellverschluß zum An- und Ablegen des Gurtbandes, und einer Befestigungseinrichtung zum Befestigen einer Leine oder Kette, **dadurch gekennzeichnet,** daß das Gurtband (1) zu einem endlosen Gurt fest verbunden ist, wobei der Schnellverschluß (3) zur Überbrückung eines Gurtabschnitts (4) und zur Einstellung einer vorbestimmten Länge des Gurtbandes (1) parallel zu dem zu überbrückenden Gurtabschnitt (4) vorgesehen ist.

2. Halsgurt nach Anspruch 1, **dadurch gekennzeichnet,** daß das Gurtband (1) längenverstellbar ist.

3. Halsgurt nach Anspruch 1 oder 2, **dadurch gekennzeichnet,** daß eine Klemmschnalle (5) zur Längenverstellung des Gurtbandes (1) vorgesehen ist, wobei das Gurtband (1) mit einem ersten Ende (6) durch die Klemmschnalle (5) und durch ein Verbindungsglied (8) geschleift ist und an der Klemmschnalle (5) befestigt ist und mit einem zweiten Ende (7) an dem Verbindungsglied (8) befestigt ist.

4. Halsgurt nach Anspruch 3, **dadurch gekennzeichnet,** daß das erste Ende (6) um einen Schnallensteg (9) geschlungen und mit einem inneren Gurtabschnitt (10) auf der gegenüberliegenden Seite des Schnallensteges (9) fest verbunden ist, derart, daß das erste Ende (6) des Gurtbandes (1) zwischen dem inneren Gurtabschnitt (10) und einem äußeren Gurtabschnitt (11) eingeschlossen ist.

5. Halsgurt nach zumindest einem der Ansprüche 1 bis 4, **dadurch gekennzeichnet,** daß der Schnellverschluß ein zweiteiliges Steckschloß (2) ist, mit einem ersten Schloßteil (12), das zumindest zwei elastische Zungen (13) mit zumindest jeweils einem hakenförmigen Absatz (14) aufweist, und einem zweiten Schloßteil (15), das eine Aussparung (16) zur Aufnahme der Zungen (13) aufweist, wobei die Zungen (13) in die Aussparung (16) einschiebbar und mit dem zweiten Schloßteil (15) in verriegelnden Eingriff bringbar sind.

6. Halsgurt nach zumindest einem der Ansprüche 1 bis 5, **dadurch gekennzeichnet,** daß die Befestigungseinrichtung ein Ring (3) ist, der in einer ersten Schlaufe (16) des Gurtbandes (1) aufgenommen und mit dem Gurtband (1) verbunden ist.

7. Halsgurt nach zumindest einem der Ansprüche 1 bis 6, **dadurch gekennzeichnet,** daß das Gurtband (1) an seinem zweiten Ende (7) dreifach schleifenförmig eingeschlagen ist und übereinanderliegende Gurtabschnitte (7, 17, 18, 19) fest miteinander verbunden sind, derart, daß drei Schlaufen (16, 20, 21) gebildet sind, wobei in einer ersten Schlaufe (16) der Ring (3), in einer zweiten Schlaufe (20) das Verbindungsglied (8) und in einer dritten Schlaufe (21) ein zweites oder erstes Schloßteil (15, 12) des Schnellverschlusses (2) aufgenommen sind.

8. Halsgurt nach Anspruch 7, **dadurch gekennzeichnet,** daß das zweite Ende (7) des Gurtbandes (1) zwischen den übereinanderliegenden Gurtabschnitten (19, 18) eingeschlossen ist.

9. Halsgurt nach zumindest einem der Ansprüche 1 bis 8, **dadurch gekennzeichnet,** daß ein erstes oder zweites Schloßteil (12, 15) des Schnellverschlusses (2) in einer vierten Schlaufe (22) des Gurtbandes (1) zwischen dem zu überbrückenden Gurtabschnitt (4) und der Klemmschnalle (5) aufgenommen ist.

10. Halsgurt nach Anspruch 9, **dadurch gekennzeichnet,** daß ein Klemmring (23) zur Führung des zu überbrückenden Gurtabschnitts (4) vorgesehen ist, derart, daß das Gurtband (1) durch den Klemmring (23), um den Steg (24) des ersten Schloßteiles (12) und zurück durch den Klemmring (23) geführt ist.

11. Halsgurt nach zumindest einem der Ansprüche 1 bis 10, **dadurch gekennzeichnet,** daß zwischen der Klemmschnalle (5) und dem Verbindungsglied (8) ein einen inneren Gurtabschnitt (10) und einen äußeren Gurtabschnitt (11) umfassender Spannring (26) vorgesehen ist.

## Claims

1. A collar for restraining and leading animals, especially dogs, comprising a strap, a quick-locking clasp for putting the strap on and for taking it off, and a fastening means for fastening a lead or a chain, **characterized in** that the strap (1) is fixedly connected so as to form an endless strap, the quick-locking clasp (2) being provided parallel to a strap section (4) to be bridged for the purpose of bridging said strap section (4) and for adjusting a predetermined length of said strap (1).

2. A collar according to claim 1, **characterized in** that the length of said strap (1) can be adjusted.

3. A collar according to claim 1 or 2, **characterized in** that a clamping buckle (5) is provided for adjusting the length of said strap (1), a first end (6) of said strap (1) being conducted in a loop through said clamping buckle (5) and through a connecting member (8) and secured to said clamping buckle (5), whereas the second end (7) of said strap (1) is secured to said connecting member (8).

4. A collar according to claim 3, **characterized in** that said first end (6) is wound around a buckle web (9) and fixedly connected to an inner strap section (10) on the opposite side of said buckle web (9) in such a way that said first end (6) of the strap (1) is enclosed between said inner strap section (10) and an outer strap section (11).

5. A collar according to at least one of the claims 1 to 4, **characterized in** that the quick-locking clasp is a two-piece snap-in lock (2), comprising a first lock member (12) having at least two elastic tongues (13) each provided with at least one hook-shaped projection (14), and a second lock member (15) having an opening (18) for receiving therein the tongues (13), said tongues (13) being adapted to be inserted into said opening (18) and to be brought into locking engagement with said second lock member (15).

6. A collar according to at least one of the claims 1 to 5, **characterized in** that the fastening means is a ring (3) which is received in a first loop (16) of the strap (1) and which is connected to said strap (1).

7. A collar according to at least one of the claims 1 to 6, **characterized in** that the strap (1) is folded into three loops at the second end (7) thereof and that superimposed strap sections (7, 17, 18, 19) are fixedly interconnected, in such a way that three loops (16, 20, 21) are formed, the ring (3) being received in a first loop (16), the connecting member (8) being received in a second loop (20) and a second or a first lock member (15, 12) of the quick-locking clasp (2) being received in a third loop (21).

8. A collar according to claim 7, **characterized in** that the second end (7) of the strap (1) is enclosed between the superimposed strap sections (19, 18).

9. A collar according to at least one of the claims 1 to 8, **characterized in** that a first or a second lock member (12, 15) of the quick-locking clasp (2) is received in a fourth loop (22) of the strap (1) between the strap section (4) to be bridged and the clamping buckle (5).

10. A collar according to claim 9, **characterized in** that a clamping ring (23) is provided for guiding the strap section (4) to be bridged, the strap (1) being guided such that it extends through the clamping ring (23), around the web (24) of the first lock member (12) and back through said clamping ring (23).

11. A collar according to at least one of the claims 1 to 10, **characterized in** that a tightening ring (26) is provided between said clamping buckle (5) and said connecting member (8), said tightening ring (26) enclosing an inner strap section (10) and an outer strap section (11).

## Revendications

1. Collier pour tenir et guider des animaux, en particulier des chiens, comprenant une courroie de collier, une fermeture rapide pour mettre et enlever la courroie de collier, et un dispositif de fixation pour fixer une laisse ou une chaîne, **caractérisé** en ce que la courroie de collier (1) est fixée pour former une courroie sans fin, la fermeture rapide étant prévue, pour couvrir une section de courroie (4) et pour régler une longueur prédéfinie de la courroie de collier (1), parallèlement à ladite section de courroie à couvrir (4).

2. Collier selon la revendication 1, **caractérisé** en ce que la courroie de collier (1) est réglable en longueur.

3. Collier selon la revendication 1 ou 2, **caractérisé** en ce qu'une boucle de serrage (5) est prévue pour le réglage en longueur de la courroie de collier (1), une première extrémité (6) de la courroie de collier (1) formant une boucle à travers la boucle de serrage (5) et à travers un élément de liaison (8) et étant fixée à la boucle de serrage (5), tandis que sa seconde extrémité (7) est fixée à l'élément de liaison (8).

4. Collier selon la revendication 3, **caractérisé** en ce que la première extrémité (6) passe autour d'une branche de boucle (9) et est reliée fermement à une section de courroie intérieure (10) sur le côté opposé de la branche (9), de telle sorte que ladite première extrémité (6) de la courroie de collier (1) est enfermée entre les sections de courroie intérieure (10) et extérieure (11).

5. Collier selon l'une au moins des revendications 1 à 4, **caractérisé** en ce que la fermeture rapide consiste en un fermoir à emboîtement en deux parties (2) formé d'un premier élément (12) qui comporte au moins deux languettes élastiques présentant chacune au moins un décrochement en forme de crochet (14), et d'un second élément (15) qui comporte un creux (16) destiné à recevoir les languettes (13), les languettes (13) étant aptes à être glissées dans le creux (16) et à être accouplées avec le second élément de fermoir (15) en vue d'un verrouillage.

6. Collier selon l'une au moins des revendications 1 à 5, **caractérisé** en ce que le dispositif de fixation consiste en un anneau (3) qui est logé dans une première boucle (16) de la courroie de collier (1) et qui est relié à la courroie de collier (1).

7. Collier selon l'une au moins des revendications 1 à 6, **caractérisé** en ce que la seconde extrémité (7) de la courroie de collier (1) est pliée trois fois en forme de boucle et des sections de courroie superposées (7, 17, 18, 19) sont reliées fermement entre elles de manière à former trois boucles (16, 20, 21), une première boucle (16) recevant l'anneau (3) tandis qu'une deuxième boucle (20) reçoit l'élément de liaison (8) et qu'une troisième boucle (21) reçoit un second ou premier élément de fermoir (15, 12) de la fermeture rapide (2).

8. Collier selon la revendication 7, **caractérisé** en ce que la seconde extrémité (7) de la courroie de collier (1) est enfermée entre les sections de courroie superposées (19, 18).

9. Collier selon l'une au moins des revendications 1 à 8, **caractérisé** en ce qu'un premier ou second élément de fermoir (12, 15) de la fermeture rapide (2) est logé dans une quatrième boucle (22) de la courroie de collier (1), entre la section de paroi à couvrir (4) et la boucle de serrage (5).

10. Collier selon la revendication 9, **caractérisé** en ce qu'un anneau de serrage (23) est prévu pour le passage de la section de courroie à couvrir (4), de telle sorte que la courroie de collier (1) traverse l'anneau de serrage (23) et passe autour de la branche (24) du premier élément de fermoir (12) pour revenir dans l'anneau de serrage (23).

11. Collier selon l'une au moins des revendications 1 à 10, **caractérisé** en ce qu'il est prévu, entre la boucle de serrage (5) et l'élément de liaison (8), un anneau tendeur (26) qui enserre des sections de courroie intérieure (10) et extérieure (11).
